# EUROPEAN PATENT APPLICATION

(11) **EP 4 425 886 A1**
(43) Date of publication of application: **04.09.2024**
(21) Application number: 23171217.5
(22) Date of filing: 03.05.2023
(51) Int. Cl.: H04L 61/5014

(54) **DHCP RELAY DEVICE TO FACILITATE IP ADDRESS RESERVATION FOR CLIENT DEVICE**

(30) Priority: 28.02.2023 US 202318176073
(71) Applicant: Juniper Networks, Inc., Sunnyvale, CA 94089 (US)
(72) Inventor: H R, Jayadev, Sunnyvale, 94089 (US); K, Kiran Kumar, Sunnyvale, 94089 (US); P K, Subramanya Sharma, Sunnyvale, 94089 (US); RADULESCU-BANU, Cristina, Sunnyvale, 94089 (US)
(74) Representative: D Young & Co LLP

(57) **Abstract**

A dynamic host configuration protocol (DHCP) relay device identifies, based on configuration information, a client device for which the DHCP relay device is to reserve an IP address. The DHCP relay device obtains, based on identifying the client device, the IP address. The DHCP relay device causes, based on the configuration information and after obtaining the IP address, the IP address to be renewed. The DHCP relay device determines, after obtaining the IP address, that the DHCP relay device is to provide the IP address to the client device, and communicates, after determining that the DHCP relay device is to provide the IP address to the client device, with the client device to provide the IP address to the client device.

## Description

### BACKGROUND

The dynamic host configuration protocol (DHCP) is a network management protocol used on Internet protocol (IP) networks for assigning IP addresses and other communication parameters to devices connected to the network using a client-server architecture. A DHCP server is a network server that automatically provides and assigns IP addresses, default gateways, and other network parameters to client devices. In some cases, a DHCP relay sits between a client device and the DHCP server to facilitate communication between the client device and the DHCP server.

### SUMMARY

Particular aspects are set out in the appended independent claims. Various optional embodiments are set out in the dependent claims.

In some implementations, a method includes identifying, by a DHCP relay device, configuration information that includes an identifier associated with a client device for which the DHCP relay device is to reserve an IP address; and communicating, by the DHCP relay device and based on the configuration information, with a DHCP server device to obtain the IP address.

In some implementations, a computer-readable medium comprising a set of instructions includes one or more instructions that, when executed by one or more processors of a DHCP relay device, cause the DHCP relay device to: identify configuration information that includes an identifier associated with a client device; and obtain, based on the configuration information, an IP address.

In some implementations, a DHCP relay device includes one or more memories; and one or more processors to: identify, based on configuration information, a client device for which the DHCP relay device is to reserve an IP address; and obtain, based on identifying the client device, the IP address.

### BRIEF DESCRIPTION OF THE DRAWINGS

Figs. 1A-1F are diagrams of one or more example implementations described herein.
Fig. 2 is a diagram of an example environment in which systems and/or methods described herein may be implemented.
Fig. 3 is a diagram of example components of a device.
Fig. 4 is a diagram of example components of a device.
Fig. 5 is a flowchart of an example process associated with IP reservation for a client device.

### DETAILED DESCRIPTION

The following detailed description of example implementations refers to the accompanying drawings. The same reference numbers in different drawings may identify the same or similar elements.

In many cases, client devices frequently enter and leave a network. Often, this results in a DHCP server assigning multiple IP addresses to a client device (e.g., each time the client device enters the network). However, the client device utilizes only a newly assigned IP address, while one or more other previously assigned IP addresses are still associated with the client device and are therefore not able to be assigned to other client devices. This can lead to IP address exhaustion, where not enough IP addresses are available to be assigned to other client devices that enter the network. This can be particularly troublesome for preferred client devices (sometimes referred to as critical client devices) that need to enter the network and utilize network resources. For example, in a network associated with a university, preferred client devices may be associated with faculty and staff of the university, but client devices of students and visitors of the university may continually enter and leave the network, which thereby restricts an ability of the preferred client devices to be assigned an IP address when the client devices enter the network.

A DHCP server can be configured to set aside IP addresses for particular client devices. However, in many cases a network administrator does not have access to and/or control of a DHCP server, and therefore cannot utilize such a configuration. Further, in many cases, client devices communicate with a DHCP relay, which communicates with the DHCP server, and therefore don't communicate directly with the DHCP server.

Some implementations described herein provide a DHCP relay device (e.g., that is associated with a network and a DHCP server device). The DHCP relay device may identify configuration information (e.g., that is included in the DHCP relay device by a network administrator) that indicates a client device for which the DHCP relay device is to reserve an IP address. The DHCP relay device then communicates with a DHCP server device to obtain and renew an IP address, and thereby the DHCP server device reserves the IP address for the client device. For example, when the IP address is an IP version 4 (IPv4) address, the DHCP relay device and DHCP server device communicate using DHCP version 4 (DHCPv4), or when the IP address is an IP version 6 (IPv6) address, the DHCP relay device and DHCP server device communicate using DHCP version 6 (DHCPv6).

Notably, the DHCP relay device automatically reserves the IP address for the client device regardless of whether the client device is available and/or is able to utilize the IP address. Accordingly, the client device may communicate with the DHCP relay device (e.g., using DHCPv4 or DHCPv6) to obtain (and then renew) the IP address (e.g., to allow the client device to utilize the IP address). At a later time, the client device may communicate with the DHCP relay device to release the IP address. Even so, the DHCP relay device still reserves the IP address for the client device (e.g., by communicating with the DHCP server device to renew the IP address). Accordingly, when the client device requests an IP address again, the DHCP relay device provides the IP address (e.g., the same reserved IP address) to the client device again.

In this way, the DHCP relay device automatically reserves an IP address for the client device. Further, the DHCP relay device performs all of the processing and communicating steps to cause the IP address to be reserved for the client device. Accordingly, the client device and the DHCP server device communicate with the DHCP relay device in a typical manner (e.g., using DHCPv4 or DHCPv6), such that the respective functionalities of the client device and the DHCP server device do not need to be changed, and the client device and the DHCP server device do not need to be provided any information indicating that the DHCP relay device is reserving the IP address for the client device.

Accordingly, the DHCP relay device ensures that IP addresses are available for particular client devices (e.g., that are indicated by the configuration information). This improves an ability of the particular network devices to enter the network and utilize network resources. Further, because a network administrator can provide and/or access the configuration information at the DHCP relay device, some implementations provide a technique to address IP address exhaustion that can be used in practical applications (as opposed to a technique that requires configuration of the DHCP server device).

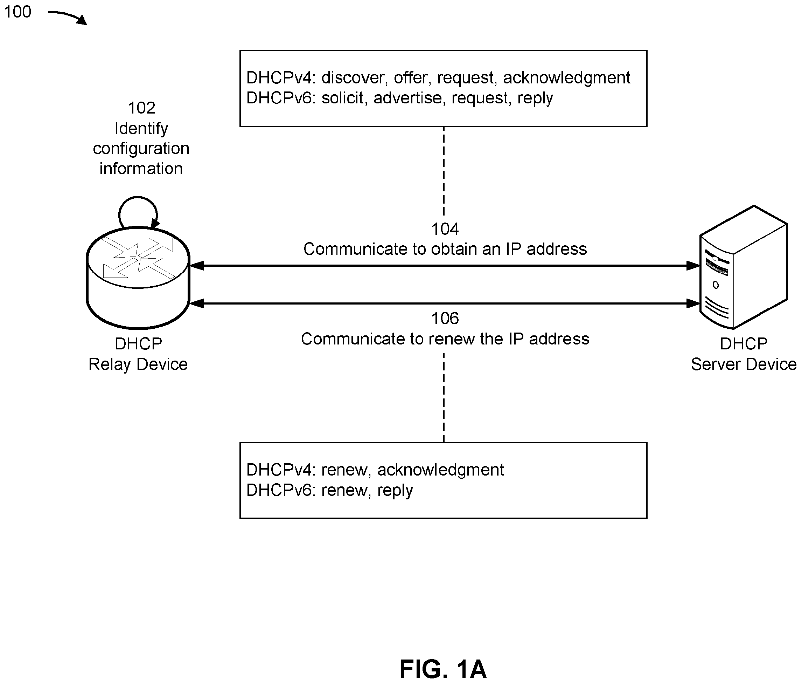

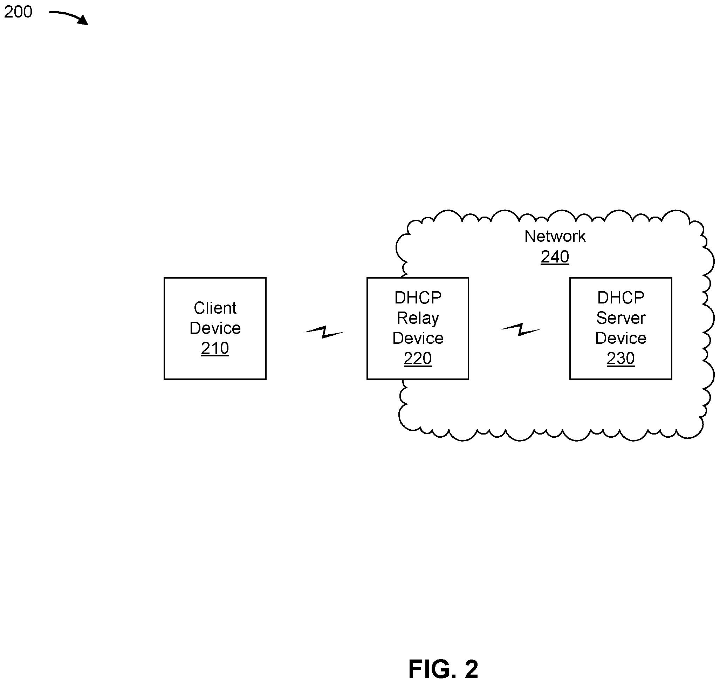

Figs. 1A-1F are diagrams of one or more example implementations 100 described herein. Example implementation(s) 100 may include a client device, a DHCP relay device, and a DHCP server device, each of which may be associated with a network. The client device, the DHCP relay device, and the DHCP server device are described in more detail below in connection with Figs. 2-4.

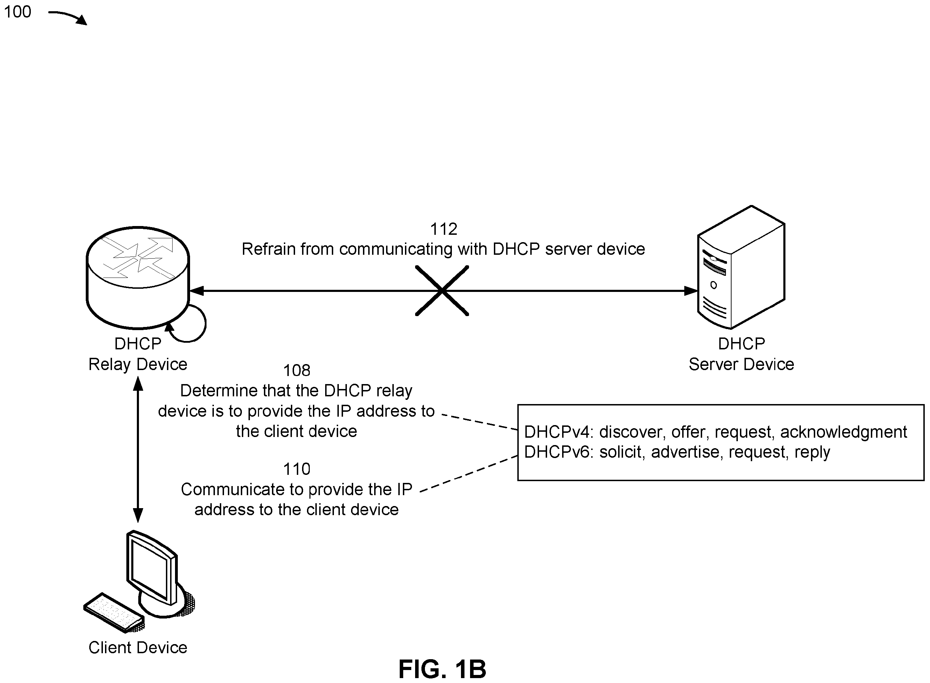

As shown in Fig. 1A, and by reference number 102, the DHCP relay device may identify configuration information. The configuration information may be stored in a data structure (e.g., a database, a table, a file, or another type of data structure) that is accessible to and/or included in the DHCP relay device. The configuration information may identify one or more client devices for which the DHCP relay device is to reserve respective IP addresses. For example, the configuration information may include an identifier (e.g., a media access control (MAC) address, or another identifier) associated with the client device shown in Figs. 1B-1F, which may indicate that the DHCP relay device is to reserve an IP address for the client device.

The DHCP relay device may identify the configuration information at a particular time, such as when the DHCP relay device boots up, on a scheduled basis, on an on-demand basis, on a triggered basis, or on an ad-hoc basis. As part of identifying the configuration information, the DHCP relay device may process (e.g., parse and/or read) the configuration information to identify the client device (e.g., as a client device for which the DHCP relay device is reserve an IP address).

As shown by reference number 104, the DHCP relay device may communicate with the DHCP server device (e.g., based on the configuration information and/or based on identifying the client device). For example, the DHCP relay device may communicate with the DHCP server device to obtain an IP address (e.g., that is to be reserved for the client device).

The IP address may be an IPv4 address. The DHCP relay device and the DHCP server device may therefore communicate using DHCPv4 to allow the DHCP relay device to obtain the IP address. For example, the DHCP relay device may send, to the DHCP server device, a discover message requesting an IP address (e.g., that is to be reserved for the client device); the DHCP server device, based on the discover message, may send, to the DHCP relay device, an offer message that offers an IP address; the DHCP relay device, based on the offer message, may send, to the DHCP server device, a request message requesting the offered IP address (e.g., to be reserved for the client device); and the DHCP server device, based on the request message, may send, to the DHCP relay device, an acknowledgment message indicating that the IP address is assigned (e.g., reserved for the client device). Alternatively, the IP address may be an IPv6 address. The DHCP relay device and the DHCP server device may therefore communicate using DHCPv6 to allow the DHCP relay device to obtain the IP address. For example, the DHCP relay device may send, to the DHCP server device, a solicit message requesting an IP address (e.g., that is to be reserved for the client device); the DHCP server device, based on the solicit message, may send, to the DHCP relay device, an advertise message that offers an IP address; the DHCP relay device, based on the advertise message, may send, to the DHCP server device, a request message requesting the offered IP address (e.g., to be reserved for the client device); and the DHCP server device, based on the request message, may send, to the DHCP relay device, a reply message indicating that the IP address is assigned (e.g., reserved for the client device).

In some implementations, the DHCP relay device may obtain the IP address for a lease period (e.g., that is defined by a lease length). For example, the DHCP server device may provide the IP address to the DHCP relay device for a lease period that begins at a time of obtainment of the IP address and that persists for the lease length.

Accordingly, as shown by reference number 106, the DHCP relay device may communicate with the DHCP server device (e.g., based on the configuration information and/or after obtaining the IP address) to renew the IP address. For example, the DHCP relay device may determine that the lease period for the IP address is about to expire, and therefore may communicate with the DHCP server device to cause the IP address to be renewed. In some implementations, the DHCP relay device may process (e.g., parse and/or read) the configuration information to determine that the DHCP relay device is to renew the IP address (e.g., to continue reserving the IP address for the client device). For example, the DHCP relay device may determine that the configuration information still includes the identifier associated with the client device, and therefore that the DHCP relay device is to continue reserving the IP address (e.g., for the client device), such as by communicating with the DHCP server device to renew the IP address.

When the IP address is an IPv4 address, the DHCP relay device and the DHCP server device may therefore communicate using DHCPv4 to renew the IP address. For example, the DHCP relay device may send, to the DHCP server device, a renew message requesting renewal of the IP address (e.g., to continue reserving the IP address for the client device); and the DHCP server device, based on the renew message, may update the lease period for the IP address and may send, to the DHCP relay device, an acknowledgment message that confirms renewal of the IP address. When the IP address is an IPv6 address, the DHCP relay device and the DHCP server device may therefore communicate using DHCPv6 to renew the IP address. For example, the DHCP relay device may send, to the DHCP server device, a renew message requesting renewal of the IP address (e.g., to continue reserving the IP address for the client device); and the DHCP server device, based on the renew message, may update the lease period for the IP address and may send, to the DHCP relay device, a reply message that confirms renewal of the IP address.

In this way, the DHCP relay device may obtain an IP address, and may cause the IP address to be renewed, for the client device (e.g., reserve the IP address for the client device), without the DHCP relay device communicating with the client device. That is, the DHCP relay device may reserve the IP address for the client device regardless of whether the client device is available to use the IP address.

As shown in Fig. 1B, and by reference number 108, the DHCP relay device may determine that the DHCP relay device is to provide the IP address to the client device. For example, the client device may request (e.g., via one or more messages) an IP address from the DHCP relay device, such as upon the client device booting up or otherwise attempting to access the network associated with the DHCP relay device. Accordingly, the DHCP relay device may determine that the DHCP relay device is to provide the IP address (e.g., the IP address the DHCP relay device reserved for the client device) to the client device. As shown by reference number 110, the DHCP relay device may communicate (e.g., based on determining that the DHCP relay device is to provide the IP address to the client device) with the client device to provide (e.g., via one or more messages) the IP address to the client device. For example, the DHCP relay device may send the IP address to the client device (e.g., in response to the client device requesting the IP address).

When the IP address is an IPv4 address, the client device and the DHCP relay device may therefore communicate using DHCPv4 to provide the IP address to the client device (e.g., as shown in association with reference numbers 108 and 110). For example, the client device may send, to the DHCP relay device, a discover message requesting an IP address (e.g., that is to be utilized by the client device); the DHCP relay device, based on the discover message, may send, to the client device, an offer message that offers the IP address (e.g., the reserved IP address for the client device); the client device, based on the offer message, may send, to the DHCP relay device, a request message requesting the IP address; and the DHCP relay device, based on the request message, may send, to the client device, an acknowledgment message indicating that the IP address is assigned to the client device. When the IP address is an IPv6 address, the client device and the DHCP relay device may communicate using DHCPv6 to provide the IP address to the client device (e.g., in association with reference numbers 108 and 110). For example, the client device may send, to the DHCP relay device, a solicit message requesting an IP address (e.g., that is to be utilized by the client device); the DHCP relay device, based on the solicit message, may send, to the client device, an advertise message that offers the IP address (e.g., the reserved IP address for the client device); the client device, based on the advertise message, may send, to the DHCP relay device, a request message requesting the IP address; and the DHCP relay device, based on the request message, may send, to the client device, a reply message indicating that the IP address is assigned to the client device.

Notably, as shown by reference number 112, the DHCP relay device may refrain from communicating with the DHCP server device to facilitate providing the IP address to the client device. That is, because the DHCP relay device has reserved the IP address for the client device, the DHCP relay device does not need to communicate with the DHCP server device to obtain and provide the IP address to the client device. Therefore, the DHCP relay device may cause the IP address (e.g., the reserved IP address) to be provided to the client device without communicating with the DHCP server device.

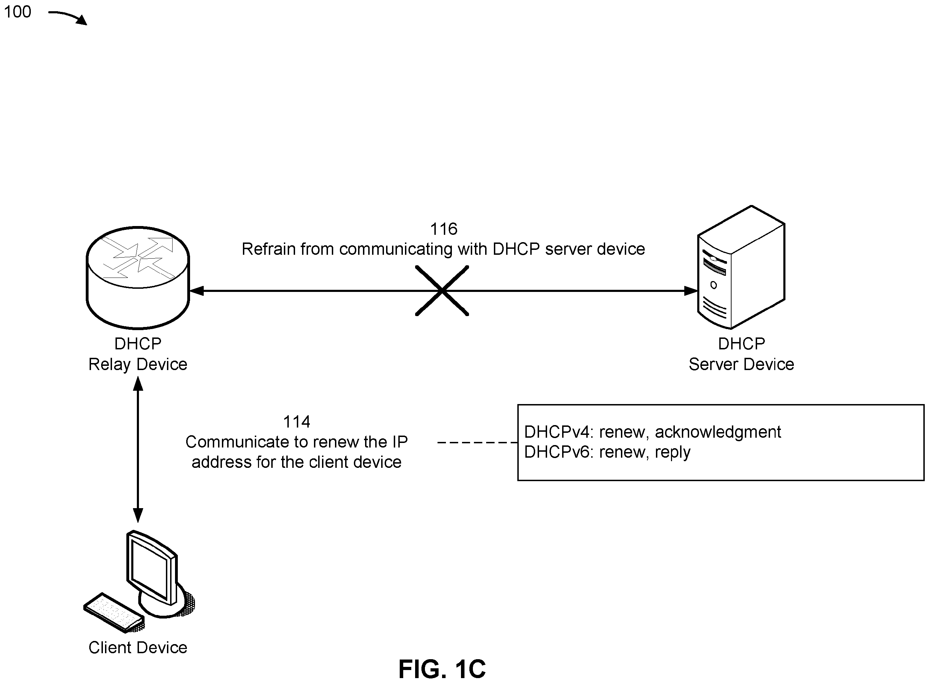

In some implementations, the DHCP relay device may provide the IP address to the client device for a lease period (e.g., that is defined by a lease length). For example, the DHCP relay device may provide the IP address to the client device for a lease period that begins at a time of obtainment of the IP address by the client device and that persists for the lease length. The lease length (a first lease length) associated with the DHCP relay device providing the IP address to the client device may be different than the lease length (a second lease length) associated with the DHCP relay device obtaining the IP address from the DHCP server device (e.g., as described herein in relation to Fig. 1A). For example, the first lease length may be greater than the second lease length. In this way, the DHCP relay device and the client device do not need to communicate as often to renew the IP address for the client device (e.g., as described herein in relation to Fig. 1C), such as because the DHCP relay device is automatically communicating with the DHCP server device to reserve the IP address for the client device. This reduces a quantity of messages that are communicated between the client device and DHCP relay device, which conserves computing resources (e.g., processing resources, memory resources, communication resources, and/or power resources, among other examples) of the client device and the DHCP relay device.

As shown in Fig. 1C, and by reference number 114, the client device may communicate with the DHCP relay device to renew the IP address for the client device. For example, the client device may determine that the lease period for the IP address for the client device is about to expire, and therefore may communicate with the DHCP relay device to cause the IP address to be renewed for the client device.

When the IP address is an IPv4 address, the client device and the DHCP relay device may communicate using DHCPv4 to renew the IP address for the client device. For example, the client device may send, to the DHCP relay device, a renew message requesting renewal of the IP address for the client device; and the DHCP relay device, based on the renew message, may update the lease period for the IP address for the client device and may send, to the client device, an acknowledgment message that confirms renewal of the IP address for the client device. When the IP address is an IPv6 address, the DHCP relay device and the DHCP server device may communicate using DHCPv6 to renew the IP address for the client device. For example, the client device may send, to the DHCP relay device, a renew message requesting renewal of the IP address for the client device; and the DHCP relay device, based on the renew message, may update the lease period for the IP address for the client device and may send, to the client device, a reply message that confirms renewal of the IP address for the client device.

Notably, as shown by reference number 116, the DHCP relay device may refrain from communicating with the DHCP server device to facilitate renewing the IP address for the client device. That is, because the DHCP relay device has reserved the IP address for the client device, the DHCP relay device does not need to communicate with the DHCP server device to renew the IP address for the client device. Therefore, the DHCP relay device may cause the IP address to be renewed for the client device without communicating with the DHCP server device.

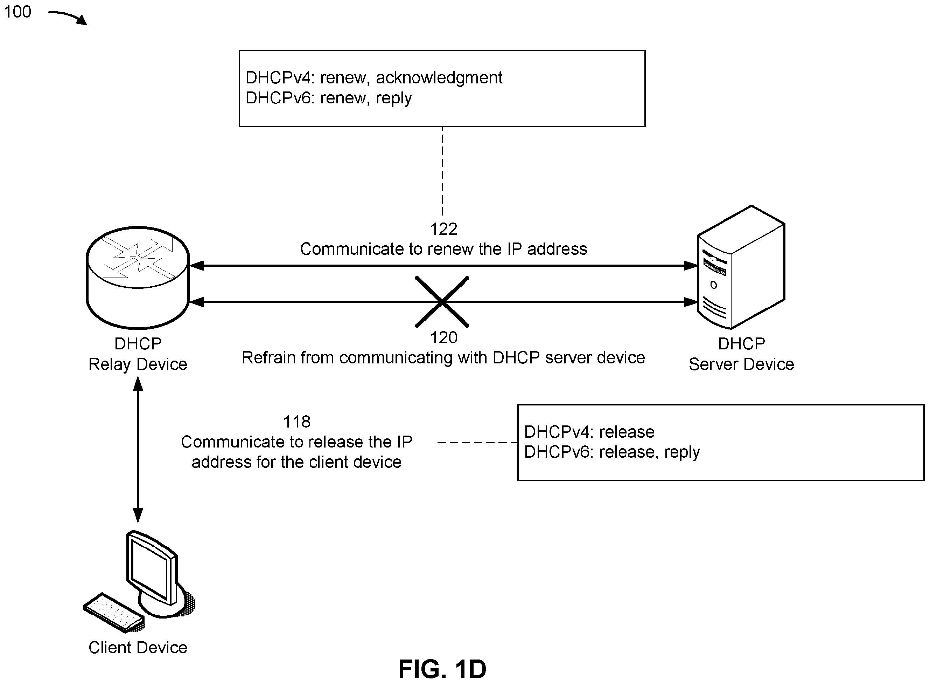

As shown in Fig. 1D, and by reference number 118, the client device may communicate with the DHCP relay device to release the IP address for the client device. For example, the client device may determine that the client device is to shut down or to otherwise cease communicating via the network associated with the DHCP relay device, and therefore may communicate with the DHCP relay device to cause the IP address to be released for the client device.

When the IP address is an IPv4 address, the client device and the DHCP relay device may communicate using DHCPv4 to release the IP address for the client device. For example, the client device may send, to the DHCP relay device, a release message requesting release of the IP address for the client device; and the DHCP relay device, based on the release message, may terminate the lease period for the IP address. When the IP address is an IPv6 address, the DHCP relay device and the DHCP server device may communicate using DHCPv6 to release the IP address for the client device. For example, the client device may send, to the DHCP relay device, a release message requesting release of the IP address for the client device; and the DHCP relay device, based on the release message, may terminate the lease period for the IP address and may send, to the client device, a reply message that confirms release of the IP address for the client device.

Notably, as shown by reference number 120, the DHCP relay device may refrain from communicating with the DHCP server device to facilitate releasing the IP address for the client device. That is, because the DHCP relay device has reserved the IP address for the client device, the DHCP relay device does not need to communicate with the DHCP server device to release the IP address for the client device (e.g., because the DHCP relay device will continue to reserve the IP address for the client device, regardless of whether the client device is utilizing the IP address). Therefore, the DHCP relay device may cause the IP address to be released for the client device without communicating with the DHCP server device.

Accordingly, as shown by reference number 122, the DHCP relay device (e.g., after the release of the IP address for the client device) may communicate with the DHCP server device to renew the IP address (e.g., to continue reserving the IP address for the client device), such as in a similar manner as that described herein in relation to Fig. 1A and reference number 106. In this way, the DHCP relay device may continue to cause the IP address to be renewed (e.g., to continue to reserve the IP address for the client device), regardless of whether the client device is available to use the IP address.

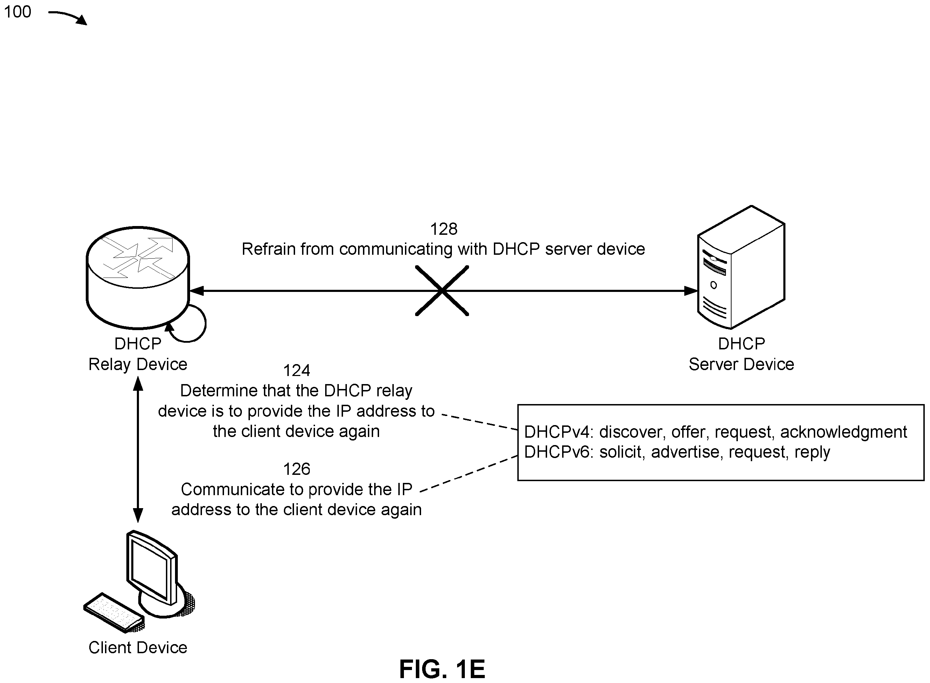

As shown in Fig. 1E, and by reference number 124, the DHCP relay device may determine (e.g., after releasing the IP address for the client device) that the DHCP relay device is to provide the IP address to the client device again, such as in a similar manner as that described herein in relation to Fig. 1B and reference number 108. Accordingly, the DHCP relay device may determine that the DHCP relay device is to provide the IP address (e.g., the IP address the DHCP relay device reserved for the client device) to the client device again. As shown by reference number 126, the DHCP relay device may communicate (e.g., based on determining that the DHCP relay device is to provide the IP address to the client device again) with the client device to provide the IP address to the client device again, such as in a similar manner as that described herein in relation to Fig. 1B and reference number 110. For example, the DHCP relay device may send the IP address to the client device again (e.g., in response to the client device requesting the IP address again).

Notably, as shown by reference number 128, the DHCP relay device may refrain from communicating with the DHCP server device to facilitate providing the IP address to the client device again. That is, because the DHCP relay device has reserved the IP address for the client device, the DHCP relay device does not need to communicate with the DHCP server device to obtain and provide the IP address to the client device again. Therefore, the DHCP relay device may cause the IP address (e.g., the reserved IP address) to be provided to the client device again without communicating with the DHCP server device.

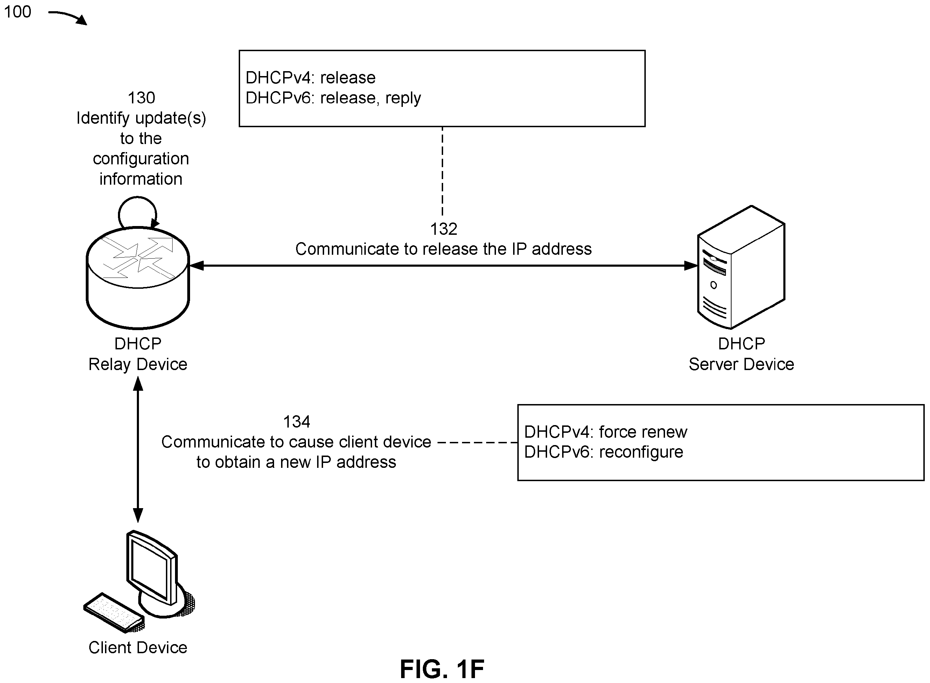

As shown in Fig. 1F, and by reference number 130, the DHCP relay device may identify one or more updates to the configuration information. For example, the DHCP relay device may determine that the configuration information no longer includes the identifier associated with the client device. The DHCP relay device may therefore determine that the IP address is to be released (e.g., determine that the DHCP relay device is to no longer reserve the IP address for the client device).

Accordingly, as shown by reference number 132, the DHCP relay device may communicate with the DHCP server device to cause the IP address to be released (e.g., to cause the IP address to cease being reserved). When the IP address is an IPv4 address, the DHCP relay device and the DHCP server device may communicate using DHCPv4 to release the IP address. For example, the DHCP relay device may send, to the DHCP server device, a release message requesting release of the IP address; and the DHCP server device, based on the release message, may terminate the lease period for the IP address. When the IP address is an IPv6 address, the DHCP relay device and the DHCP server device may communicate using DHCPv6 to release the IP address. For example, the DHCP relay device may send, to the DHCP server device, a release message requesting release of the IP address; and the DHCP server device, based on the release message, may terminate the lease period for the IP address and may send, to the DHCP relay device, a reply message that confirms release of the IP address. The DHCP relay device may refrain from sending the reply message to the client device (e.g., because the client device did not initiate release of the IP address).

As shown by reference number 134, the DHCP relay device may communicate with the client device to cause the client device to obtain a new IP address (e.g., that is not a reserved IP address), such as when the DHCP relay device causes the IP address to be released (e.g., to cease being reserved for the client device) while the client device is utilizing the IP address. When the IP address is an IPv4 address, the DHCP relay device and the client device may communicate using DHCPv4 to cause the client device to obtain a new IP address. For example, the DHCP relay device may send, to the client device, a force renew message to cause the client device to enter a renew state and thereby cause the client device to communicate with the DHCP relay device to request a new IP address (e.g., that is not a reserved IP address), such as per a typical DHCPv4 procedure. When the IP address is an IPv6 address, the DHCP relay device and the client device may communicate using DHCPv6 to cause the client device to obtain a new IP address. For example, the DHCP relay device may send, to the client device, a reconfigure message to cause the client device to enter a reconfiguration state and thereby cause the client device to communicate with the DHCP relay device to request a new IP address (e.g., that is not a reserved IP address), such per a typical DHCPv6 procedure.

As indicated above, Figs. 1A-1F are provided as an example. Other examples may differ from what is described with regard to Figs. 1A-1F.

Fig. 2 is a diagram of an example environment 200 in which systems and/or methods described herein may be implemented. As shown in Fig. 2, environment 200 may include a client device 210, a DHCP relay device 220, a DHCP server device 230, and a network 240. Devices of environment 200 may interconnect via wired connections, wireless connections, or a combination of wired and wireless connections.

The client device 210 may include one or more devices capable of receiving, generating, storing, processing, and/or providing information, as described elsewhere herein. The client device 210 may include a communication device and/or a computing device. For example, the client device 210 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device. The client device may be configured to obtain an IP address (e.g., a reserved IP address), such as by communicating with the DHCP relay device 220.

The DHCP relay device 220 includes one or more devices capable of receiving, processing, storing, routing, and/or providing information, as described elsewhere herein. The DHCP relay device 220 may include a router, such as a label switching router (LSR), a label edge router (LER), an ingress router, an egress router, a provider router (e.g., a provider edge router or a provider core router), a virtual router, or another type of router. Additionally, or alternatively, the DHCP relay device 220 may include a gateway, a switch, a firewall, a hub, a bridge, a reverse proxy, a server (e.g., a proxy server, a cloud server, or a data center server), a load balancer, and/or a similar device. In some implementations, the DHCP relay device 220 may be a physical device implemented within a housing, such as a chassis. In some implementations, the DHCP relay device 220 may be a virtual device implemented by one or more computer devices of a cloud computing environment or a data center. In some implementations, the DHCP relay device 220 may be configured to reserve an IP address for the client device 210, such as by communicating with the DHCP server device 230.

The DHCP server device 230 may include one or more devices capable of receiving, generating, storing, processing, providing, and/or routing information, as described elsewhere herein. The DHCP server device 230 may include a communication device and/or a computing device. For example, the DHCP server device 230 may include a server, such as an application server, a client server, a web server, a database server, a host server, a proxy server, a virtual server (e.g., executing on computing hardware), or a server in a cloud computing system. In some implementations, the DHCP server device 230 may include computing hardware used in a cloud computing environment. In some implementations, the DHCP server device 230 may be configured to provide an IP address to the DHCP relay device 220 (e.g., to be reserved for the client device 210), such as by communicating with the DHCP relay device 220.

Network 240 includes one or more wired and/or wireless networks. For example, network 240 may include a packet switched network, a cellular network (e.g., a fifth generation

(5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

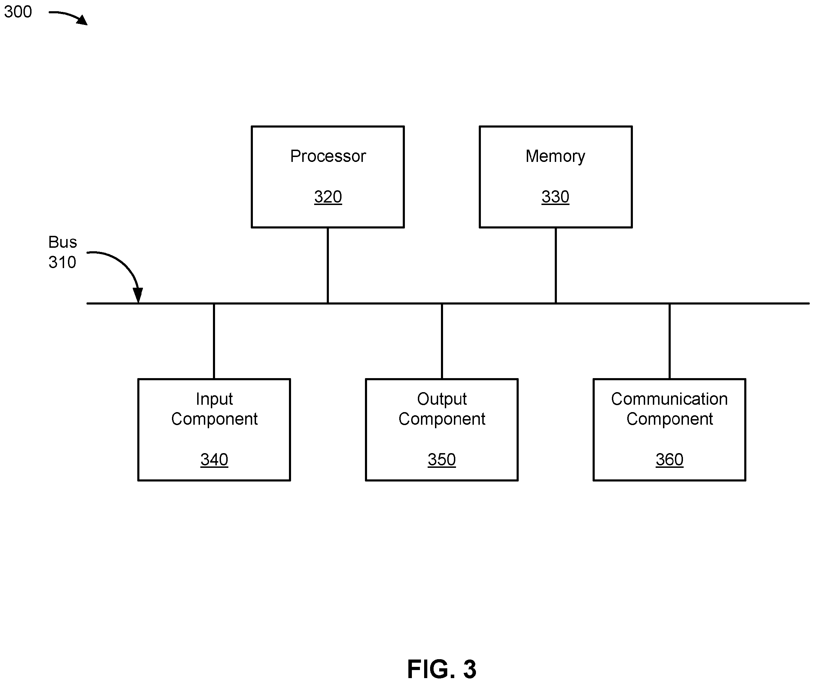

Fig. 3 is a diagram of example components of a device 300, which may correspond to the client device 210, the DHCP relay device 220, and/or the DHCP server device 230. In some implementations, the client device 210, the DHCP relay device 220, and/or the DHCP server device 230 includes one or more devices 300 and/or one or more components of device 300. As shown in Fig. 3, device 300 may include a bus 310, a processor 320, a memory 330, an input component 340, an output component 350, and a communication component 360.

Bus 310 includes one or more components that enable wired and/or wireless communication among the components of device 300. Bus 310 may couple together two or more components of Fig. 3, such as via operative coupling, communicative coupling, electronic coupling, and/or electric coupling. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform one or more operations or processes described elsewhere herein.

Memory 330 includes volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of device 300. In some implementations, memory 330 includes one or more memories that are coupled to one or more processors (e.g., processor 320), such as via bus 310.

Input component 340 enables device 300 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables device 300 to provide output, such as via a display, a speaker, and/or a light-emitting diode. Communication component 360 enables device 300 to communicate with other devices via a wired connection and/or a wireless connection. For example, communication component 360 may include a receiver, a transmitter, a transceiver, a modem, a network interface card, and/or an antenna.

Device 300 may perform one or more operations or processes described herein. For example, a non-transitory computer-readable medium (e.g., memory 330) may store a set of instructions (e.g., one or more instructions or code) for execution by processor 320. Such instructions may be received to the device 300 (for example for storage in memory 330) by way of a data transmission medium used for conveying information over a computer network, data access network or the like. Processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

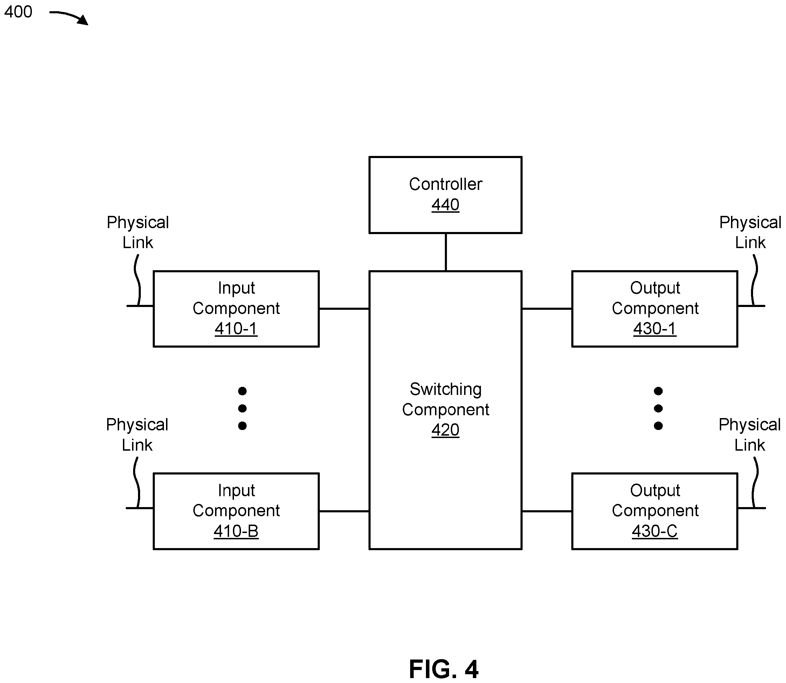

Fig. 4 is a diagram of example components of a device 400. Device 400 may correspond to the client device 210, the DHCP relay device 220, and/or the DHCP server device 230. In some implementations, the client device 210, the DHCP relay device 220, and/or the DHCP server device 230 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions. Such instructions may be provided to the controller from a computer-readable medium. A computer readable medium may take the form of a computer-readable storage medium and/or a computer readable transmission medium. A computer readable storage medium, which may be termed "non-transitory" may include a memory device. A memory device includes memory space within a single physical storage device or memory space spread across multiple physical storage devices. A computer-readable transmission medium may include a carrier wave, transmission signal or the like. A computer-readable transmission medium may occur between components of a single computer system and/or between plural separate computer systems.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

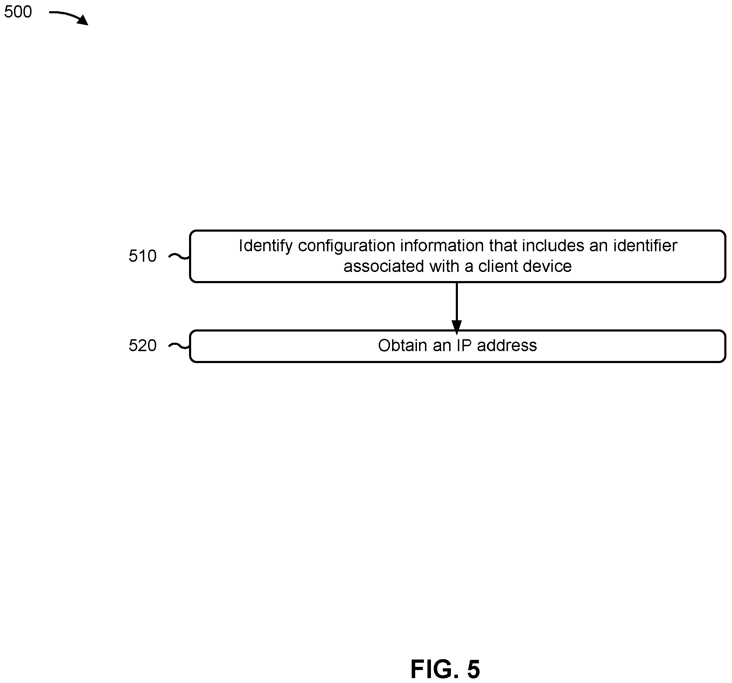

Fig. 5 is a flowchart of an example process 500 associated with IP reservation for a client device. In some implementations, one or more process blocks of Fig. 5 are performed by a DHCP relay device (e.g., the DHCP relay device 220). In some implementations, one or more process blocks of Fig. 5 are performed by another device or a group of devices separate from or including the DHCP relay device, such as a client device (e.g., the client device 210) and/or a DHCP server device (e.g., the DHCP server device 230). Additionally, or alternatively, one or more process blocks of Fig. 5 may be performed by one or more components of device 300, such as processor 320, memory 330, input component 340, output component 350, and/or communication component 360; one or more components of device 400, such as input component 410, switching component 420, output component 430, and/or controller 440; and/or one or more other components.

As shown in Fig. 5, process 500 may include identifying configuration information that includes an identifier associated with a client device (block 510). For example, the DHCP relay device may identify configuration information that includes an identifier associated with a client device, as described above.

As further shown in Fig. 5, process 500 may include obtaining an IP address (block 520). For example, the DHCP relay device may obtain, based on the configuration information, an IP address, as described above.

Process 500 may include additional implementations, such as any single implementation or any combination of implementations described below and/or in connection with one or more other processes described elsewhere herein.

In a first implementation, process 500 includes causing, based on the configuration information and after obtaining the IP address, the IP address to be renewed.

In a second implementation, alone or in combination with the first implementation, process 500 includes determining, after obtaining the IP address, that the configuration information no longer includes the identifier associated with the client device, and causing, based on determining that the configuration information no longer includes the identifier associated with the client device, the IP address to be released.

In a third implementation, alone or in combination with one or more of the first and second implementations, process 500 includes determining, after obtaining the IP address, that the DHCP relay device is to provide the IP address to the client device, and communicating, after determining that the DHCP relay device is to provide the IP address to the client device, with the client device to provide the IP address to the client device.

In a fourth implementation, alone or in combination with one or more of the first through third implementations, process 500 includes receiving, from the client device and after providing the IP address to the client device, a request to renew the IP address for the client device, and sending, to the client device and based on the request to renew the IP address, confirmation of renewal of the IP address for the client device.

In a fifth implementation, alone or in combination with one or more of the first through fourth implementations, process 500 includes receiving, from the client device and after providing the IP address to the client device, a notification of release of the IP address for the client device, and causing, based on the configuration information and after receiving the notification of release of the IP address for the client device, the IP address to be renewed.

In a sixth implementation, alone or in combination with one or more of the first through fifth implementations, process 500 includes receiving, from the client device and after providing the IP address to the client device, a notification of release of the IP address for the client device; communicating, after receiving the notification of release of the IP address for the client device, with the client device to determine that the DHCP relay device is to provide the IP address to the client device again; and communicating, after determining that the DHCP relay device is to provide the IP address to the client device again, with the client device to provide the IP address to the client device again.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

Therefore, from one perspective, there has been described a dynamic host configuration protocol (DHCP) relay device configured to identify, based on configuration information, a client device for which the DHCP relay device is to reserve an IP address. The DHCP relay device is configured to obtain, based on identifying the client device, the IP address. The DHCP relay device is configured to cause, based on the configuration information and after obtaining the IP address, the IP address to be renewed. The DHCP relay device is configured to determine, after obtaining the IP address, that the DHCP relay device is to provide the IP address to the client device, and to communicate, after determining that the DHCP relay device is to provide the IP address to the client device, with the client device to provide the IP address to the client device.

Further examples are set out in the following numbered clauses:
Clause 1. A method, comprising: identifying, by a dynamic host configuration protocol (DHCP) relay device, configuration information that includes an identifier associated with a client device for which the DHCP relay device is to reserve an Internet protocol (IP) address; and communicating, by the DHCP relay device and based on the configuration information, with a DHCP server device to obtain the IP address.
Clause 2. The method of clause 1, further comprising: communicating, based on the configuration information and after obtaining the IP address, with the DHCP server device to renew the IP address.
Clause 3. The method of clause 1 or 2, further comprising: determining, after obtaining the IP address, that the configuration information no longer includes the identifier associated with the client device; and communicating, based on determining that the configuration information no longer includes the identifier associated with the client device, with the DHCP server device to release the IP address.
Clause 4. The method of clause 1, 2 or 3, further comprising: receiving, from the client device and after obtaining the IP address, a first message; determining, based on the first message, that the DHCP relay device is to provide the IP address to the client device; and sending, to the client device and based on determining that the DHCP relay device is to provide the IP address to the client device, a second message that includes the IP address.
Clause 5. The method of clause 4, wherein: the DHCP relay device obtains the IP address for a first lease length; the DHCP relay device provides the IP address to the client device for a second lease length; and the first lease length and the second lease length are different.
Clause 6. The method of clause 4 or 5, further comprising: receiving, from the client device and after sending the second message, a third message that includes a request to renew the IP address for the client device; and sending, to the client device and based on the third message, a fourth message that confirms renewal of the IP address for the client device.
Clause 7. The method of clause 4 or 5, further comprising: receiving, from the client device and after sending the second message, a third message that includes a notification of release of the IP address for the client device; and communicating, based on the configuration information and after receiving the third message, with the DHCP server device to renew the IP address.
Clause 8. The method of clause 4 or 5, further comprising: receiving, from the client device and after sending the second message, a third message that includes a notification of release of the IP address for the client device; receiving, from the client device and after receiving the third message, a fourth message; determining, based on the fourth message, that the DHCP relay device is to provide the IP address to the client device again; and sending, to the client device and based on determining that the DHCP relay device is to provide the IP address to the client device again, a fifth message that includes the IP address.
Clause 9. A computer-readable medium comprising a set of instructions, the set of instructions comprising: one or more instructions that, when executed by one or more processors of a dynamic host configuration protocol (DHCP) relay device, cause the DHCP relay device to: identify configuration information that includes an identifier associated with a client device; and obtain, based on the configuration information, an Internet protocol (IP) address.
Clause 10. The computer-readable medium of clause 9, wherein the one or more instructions further cause the DHCP relay device to: cause, based on the configuration information and after obtaining the IP address, the IP address to be renewed.
Clause 11. The computer-readable medium of clause 9 or 10, wherein the one or more instructions further cause the DHCP relay device to: determine, after obtaining the IP address, that the configuration information no longer includes the identifier associated with the client device; and cause, based on determining that the configuration information no longer includes the identifier associated with the client device, the IP address to be released.
Clause 12. The computer-readable medium of clause 9, 10 or 11, wherein the one or more instructions further cause the DHCP relay device to: determine, after obtaining the IP address, that the DHCP relay device is to provide the IP address to the client device; and communicate, after determining that the DHCP relay device is to provide the IP address to the client device, with the client device to provide the IP address to the client device.
Clause 13. The computer-readable medium of clause 12, wherein the one or more instructions further cause the DHCP relay device to: receive, from the client device and after providing the IP address to the client device, a request to renew the IP address for the client device; and send, to the client device and based on the request to renew the IP address, confirmation of renewal of the IP address for the client device.
Clause 14. The computer-readable medium of clause 12, wherein the one or more instructions further cause the DHCP relay device to: receive, from the client device and after providing the IP address to the client device, a notification of release of the IP address for the client device; and cause, based on the configuration information and after receiving the notification of release of the IP address for the client device, the IP address to be renewed.
Clause 15. The computer-readable medium of clause 12, wherein the one or more instructions further cause the DHCP relay device to: receive, from the client device and after providing the IP address to the client device, a notification of release of the IP address for the client device; determine, after receiving the notification of release of the IP address for the client device, that the DHCP relay device is to provide the IP address to the client device again; and communicate, after determining that the DHCP relay device is to provide the IP address to the client device again, with the client device to provide the IP address to the client device again.
Clause 16. A dynamic host configuration protocol (DHCP) relay device, comprising: one or more memories; and one or more processors to: identify, based on configuration information, a client device for which the DHCP relay device is to reserve an Internet protocol (IP) address; and obtain, based on identifying the client device, the IP address.
Clause 17. The DHCP relay device of clause 16, wherein the one or more processors are further to: cause, based on the configuration information and after obtaining the IP address, the IP address to be renewed.
Clause 18. The DHCP relay device of clause 16 or 17, wherein the one or more processors are further to: determine, based on the configuration information and after obtaining the IP address, that the IP address is to be released; and cause, based on determining that the IP address is to be released, the IP address to be released.
Clause 19. The DHCP relay device of clause 16, 17 or 18, wherein the one or more processors are further to: determine, after obtaining the IP address, that the DHCP relay device is to provide the IP address to the client device; and communicate, after determining that the DHCP relay device is to provide the IP address to the client device, with the client device to provide the IP address to the client device.
Clause 20. The DHCP relay device of clause 19, wherein the one or more processors are further to: receive, from the client device and after providing the IP address to the client device, a notification of release of the IP address for the client device; and cause, based on the configuration information and after receiving the notification of release of the IP address for the client device, the IP address to be renewed.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A method, comprising:
identifying, by a dynamic host configuration protocol (DHCP) relay device, configuration information that includes an identifier associated with a client device for which the DHCP relay device is to reserve an Internet protocol (IP) address; and
communicating, by the DHCP relay device and based on the configuration information, with a DHCP server device to obtain the IP address.

2. The method of claim 1, further comprising:
communicating, based on the configuration information and after obtaining the IP address, with the DHCP server device to renew the IP address.

3. The method of claim 1 or 2, further comprising:
determining, after obtaining the IP address, that the configuration information no longer includes the identifier associated with the client device; and
communicating, based on determining that the configuration information no longer includes the identifier associated with the client device, with the DHCP server device to release the IP address.

4. The method of claim 1, 2 or 3, further comprising:
receiving, from the client device and after obtaining the IP address, a first message;
determining, based on the first message, that the DHCP relay device is to provide the IP address to the client device; and
sending, to the client device and based on determining that the DHCP relay device is to provide the IP address to the client device, a second message that includes the IP address.

5. The method of claim 4, wherein:
the DHCP relay device obtains the IP address for a first lease length;
the DHCP relay device provides the IP address to the client device for a second lease length; and
the first lease length and the second lease length are different.

6. The method of claim 4 or 5, further comprising:
receiving, from the client device and after sending the second message, a third message that includes a request to renew the IP address for the client device; and
sending, to the client device and based on the third message, a fourth message that confirms renewal of the IP address for the client device.

7. The method of claim 4 or 5, further comprising:
receiving, from the client device and after sending the second message, a third message that includes a notification of release of the IP address for the client device; and
one selected from the group comprising:
communicating, based on the configuration information and after receiving the third message, with the DHCP server device to renew the IP address; and
receiving, from the client device and after receiving the third message, a fourth message; determining, based on the fourth message, that the DHCP relay device is to provide the IP address to the client device again; and sending, to the client device and based on determining that the DHCP relay device is to provide the IP address to the client device again, a fifth message that includes the IP address.

8. A computer-readable medium comprising a set of instructions, the set of instructions comprising:
one or more instructions that, when executed by one or more processors of a dynamic host configuration protocol (DHCP) relay device, cause the DHCP relay device to:
identify configuration information that includes an identifier associated with a client device; and
obtain, based on the configuration information, an Internet protocol (IP) address.

9. The computer-readable medium of claim 8, wherein the one or more instructions further cause the DHCP relay device to:
cause, based on the configuration information and after obtaining the IP address, the IP address to be renewed.

10. The computer-readable medium of claim 8 or 9, wherein the one or more instructions further cause the DHCP relay device to:
determine, after obtaining the IP address, that the configuration information no longer includes the identifier associated with the client device; and
cause, based on determining that the configuration information no longer includes the identifier associated with the client device, the IP address to be released.

11. The computer-readable medium of claim 8, 9 or 10, wherein the one or more instructions further cause the DHCP relay device to:
determine, after obtaining the IP address, that the DHCP relay device is to provide the IP address to the client device; and
communicate, after determining that the DHCP relay device is to provide the IP address to the client device, with the client device to provide the IP address to the client device.

12. The computer-readable medium of claim 12, wherein the one or more instructions further cause the DHCP relay device to:
receive, from the client device and after providing the IP address to the client device, a request to renew the IP address for the client device; and
send, to the client device and based on the request to renew the IP address, confirmation of renewal of the IP address for the client device.

13. The computer-readable medium of claim 12, wherein the one or more instructions further cause the DHCP relay device to:
receive, from the client device and after providing the IP address to the client device, a notification of release of the IP address for the client device; and
one selected from the group comprising:
cause, based on the configuration information and after receiving the notification of release of the IP address for the client device, the IP address to be renewed; and
determine, after receiving the notification of release of the IP address for the client device, that the DHCP relay device is to provide the IP address to the client device again; and communicate, after determining that the DHCP relay device is to provide the IP address to the client device again, with the client device to provide the IP address to the client device again.

14. A dynamic host configuration protocol (DHCP) relay device, comprising:
one or more memories; and
one or more processors to:
identify, based on configuration information, a client device for which the DHCP relay device is to reserve an Internet protocol (IP) address; and
obtain, based on identifying the client device, the IP address.

15. The DHCP relay device of claim 14, further configured to conduct the method of any of claims 1 to 7, or configured in accordance with the instructions of any of claims 8 to 13.
